# EUROPEAN PATENT APPLICATION

(11) **EP 2 916 043 A2**
(43) Date of publication of application: **09.09.2015**
(21) Application number: 15154932.6
(22) Date of filing: 12.02.2015
(51) Int. Cl.: F16H 25/20, F16H 25/22

(54) **Screw-type linear actuator including a torsion rod with bidirectional stop**

(30) Priority: 24.02.2014 US 201414188130
(71) Applicant: Honeywell International Inc., Morristown, NJ 07962-2245 (US)
(72) Inventor: Parker, Kim, Morristown, NJ 07962-2245 (US); Boyle, Mark, Morristown, NJ 07962-2245 (US); Auer, Pete, Morristown, NJ 07962-2245 (US); Gaines, Louie Timothy, Morristown, NJ 07962-2245 (US)
(74) Representative: Houghton, Mark Phillip

(57) **Abstract**

An actuator (100) includes an actuator housing (108), a screw (104), a nut (106), a rod end (138), a torque bar (146), and a bidirectional stop (148). The torque bar (146) extends through the screw (104) and is configured to rotate therewith. The torque bar (146) has a first end (118,142,152,202) and a second end (122,144,153,204). The bidirectional stop (148) is formed on the first end (118,142,152,202) of the torque bar (146) and is disposed external to the screw (104). The bidirectional stop (148) has a first side (152) and a second side (154). The first side (152) has a third dog stop (156) formed thereon, and the second side (154) has a fourth dog stop (158) formed thereon. The first dog stop (212) engages the third dog stop (156) when the nut (106) is in the fully extended position, and the second dog stop (302) engages the fourth dog stop (158) when the nut (106) is in the fully retracted position.

## Description

### TECHNICAL FIELD

The present invention generally relates to actuators, and more particularly relates to linear, screw-type linear actuators that include a torsion rod with a bidirectional stop.

### BACKGROUND

Actuators are used in myriad devices and systems. For example, many vehicles including, for example, aircraft, spacecraft, watercraft, and numerous other terrestrial and non-terrestrial vehicles, include one or more actuators to effect the movement of various control surfaces or components. Many different types of actuator configurations presently exist. One particular type of actuator is a linear electromechanical actuator (EMA). A typical linear EMA includes a power drive unit, an actuation member, and a translation member. The power drive unit, such as a motor, is configured to supply a drive torque to the actuation member, which in turn causes the translation member to translate.

One particular type of linear EMA is a screw-type actuator. There are many different types of screw-type actuators including, for example, acme screw actuators, and ball screw actuators, just to name a few. No matter the specific type, in general a screw-type actuator includes a screw and a nut. The nut is mounted on, and is configured to rotate relative to, the screw. In some configurations, the screw is the actuation member, and the nut is the translation member. With these configurations, the power drive unit drives the screw, which causes the nut to translate. In other configurations, the nut is the actuation member, and the screw is the translation member. With these configurations, the power drive unit drives the nut, which causes the screw to translate.

With either of above-described configurations, whenever the translation member reaches the limits of its translational stroke, it may impact a translational stop structure and transfer unwanted mechanical loads to relatively sensitive mechanical components.

Hence, there is a need for an actuator that will prevent, or at least inhibit, unwanted mechanical loads from being transferred to relatively sensitive mechanical components. The present invention addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, an actuator includes an actuator housing, a screw, a nut, a rod end, a torque bar, and a bidirectional stop. The screw is rotationally mounted within the actuator housing, is coupled to receive a drive torque, and is configured, upon receipt of the drive torque, to rotate. The nut has an opening through which the screw extends and is configured, upon rotation of the screw, to translate between a fully retracted position and a fully extended position. The nut has a first dog stop formed thereon. The rod end is coupled to, and is spaced apart from, the nut. The rod end is configured to translate with the nut and has a second dog stop formed thereon. The torque bar extends through the screw and is configured to rotate therewith. The torque bar has a first end and a second end. The bidirectional stop is formed on the first end of the torque bar and is disposed external to the screw. The bidirectional stop has a first side and a second side. The first side has a third dog stop formed thereon, and the second side has a fourth dog stop formed thereon. The first dog stop engages the third dog stop when the nut is in the fully extended position, and the second dog stop engages the fourth dog stop when the nut is in the fully retracted position.

In another embodiment, and actuator includes an actuator housing, a screw, a nut, a rod end, a torque bar, and a bidirectional stop. The screw is rotationally mounted within the actuator housing, is coupled to receive a drive torque, and is configured, upon receipt of the drive torque, to rotate. The nut has an opening through which the screw extends and is configured, upon rotation of the screw, to translate between a fully retracted position and a fully extended position. The nut has a first dog stop formed thereon. The rod end is coupled to, and is spaced apart from, the nut. The rod end is configured to translate with the nut and has a second dog stop formed thereon. The torque bar extends through the screw and is configured to rotate therewith. The torque bar has a first end and a second end. The bidirectional stop is formed on the first end of the torque bar and is disposed external to the screw. The bidirectional stop has a first side and a second side. The first side has a third dog stop formed thereon, and the second side has a fourth dog stop formed thereon. The first dog stop engages the third dog stop when the nut is in the fully extended position, the second dog stop engages the fourth dog stop when the nut is in the fully retracted position, and the torque bar is configured, upon engagement of the first and third dog stops and the second and fourth dog stops, to at least selectively twist and transmit torque loads to the actuator housing

In yet another embodiment, an actuator includes an actuator housing, a motor, a screw, a nut, a rod end, an extension tube, a torque bar, and a bidirectional stop. The motor is mounted on the actuator housing and is configured to selectively supply a drive torque. The screw is rotationally mounted within the actuator housing, is coupled to receive the drive torque, and is configured, upon receipt of the drive torque, to rotate. The nut has an opening through which the screw extends. The nut is configured, upon rotation of the screw, to translate between a fully retracted position and a fully extended position. The nut has a first dog stop formed thereon. The rod end is spaced apart from and is configured to translate with the nut. The rod end has a second dog stop formed thereon. The extension tube is coupled between the nut and the rod end and is configured to translate therewith. The torque bar extends through the screw and is configured to rotate therewith. The torque bar has a first end and a second end. The bidirectional stop is formed integrally on the first end of the torque bar and is disposed external to the screw. The bidirectional stop has a first side and a second side. The first side has a third dog stop formed thereon, and the second side has a fourth dog stop formed thereon. The first dog stop engages the third dog stop when the nut is in the fully extended position, and the second dog stop engages the fourth dog stop when the nut is in the fully retracted position.

Furthermore, other desirable features and characteristics of the actuator and method will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the drawing figures, wherein like numerals denote like elements, and wherein:
FIG. 1 depicts a cross section view of one embodiment of a screw-type linear actuator;
FIGS. 2 and 3 depicts a close-up, partial cross section view of the actuator of FIG. 1 in the fully extended position and fully retracted position, respectively; and
FIG. 4 depicts the cross section view of the screw-type linear actuator of FIG. 1, showing how impact torque loads are transferred through the actuator.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

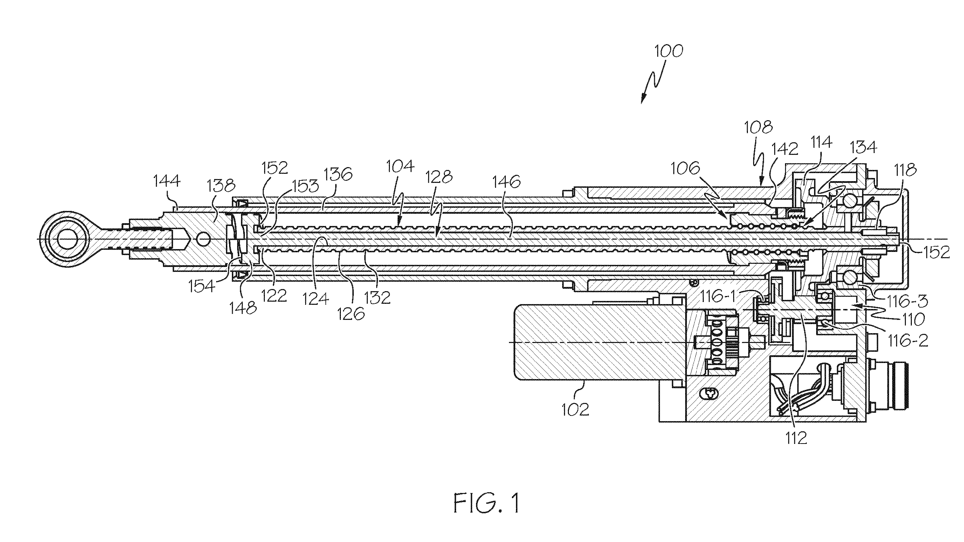

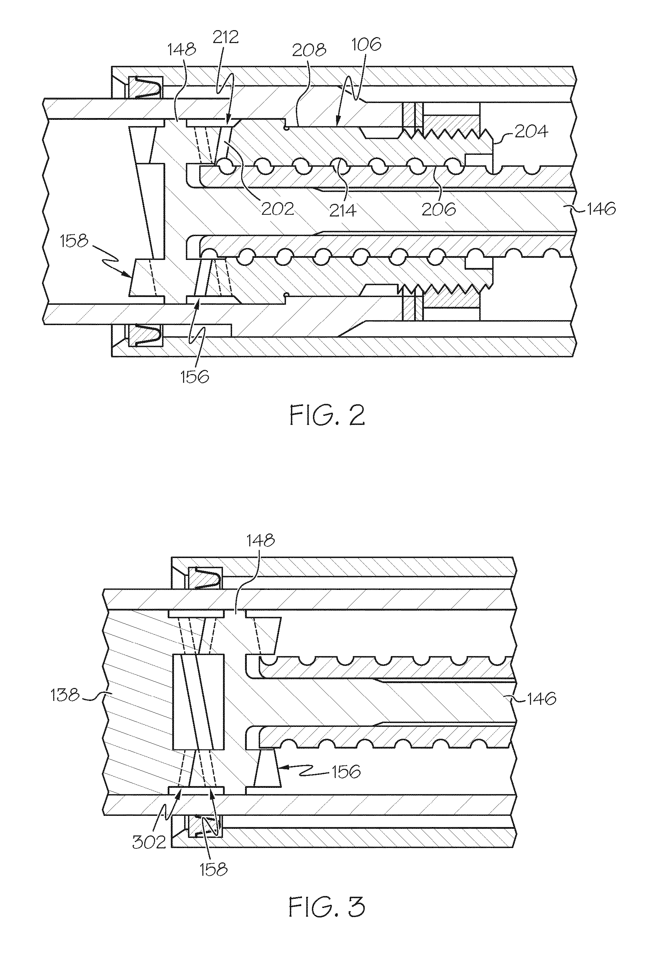

Referring to FIGS. 1 and 2, an exemplary linear screw-type actuator 100 is depicted. The depicted linear screw-type actuator 100 is implemented as a ball screw actuator, but in other embodiments it could be implemented as an acme screw actuator, or any one of numerous other screw-type actuators. Nonetheless, the depicted actuator 100 includes a motor 102, a screw 104, and a nut 106, all disposed at least partially within or on an actuator housing 108.

The motor 102, which is mounted on the housing 108, may be variously configured and implemented. For example, the motor 102 may be implemented using any one of numerous types of hydraulic motors, pneumatic motors, or electric motors. In the depicted embodiment, it is implemented using an electric motor, which may be any one of numerous types of electric motors, such as an AC motor, a brushed DC motor, or a brushless DC motor, just to name a few. No matter how the motor 102 is specifically implemented, it is coupled to the screw 104, preferably via a gear set 110, and is configured to selectively supply a drive torque to the screw 104. Although a single motor 102 is depicted in FIG. 1, it will be appreciated that the actuator 100 could be implemented with two or more motors 102.

The screw 104 extends through the actuator housing 108 and is coupled to the gear set 110. The gear set 110 may be variously configured and implemented, but in the depicted embodiment includes at least a motor interface gear 112 and a bull gear 114, and is rotationally mounted in the housing 108 via a plurality of bearing assemblies 116 (e.g., 116-1, 116-2, 116-3). The screw 104 is coupled, via the gear set 110, to receive the input torque supplied from the motor 102 and is configured, upon receipt thereof, to rotate and supply a drive force to the nut 106. The screw 104 may be variously configured and implemented, but in the depicted embodiment is configured and implemented as a ball screw, and includes at least a first end 118, a second end 122, an inner surface 124, and an outer surface 126. The screw inner surface 124 defines a passageway 128 that extends through the screw 104 between the first and second ends 118, 122. The outer surface 126 has a plurality of helical grooves (or "threads") 132 formed thereon, and is coupled to the bull gear 114. The bull gear 114 receives, via the interface gear 112, the rotational drive torque supplied from the motor 102, which in turn causes the screw 104 to rotate and supply the drive force to the nut 106.

The nut 106 is disposed within the actuator housing 108 and has an opening 134 through which the screw 104 extends. The nut 106 is configured, upon receipt of the drive force supplied thereto from the screw 104, to translate between a fully retracted position and a fully extended position. As illustrated most clearly in FIG. 2, the nut 106 includes a first end 202, a second end 204, an inner surface 206, and an outer surface 208. The nut first end 202 has a first dog stop 212 formed thereon, the purpose of which will be described further below. The nut inner surface 206 has a single or a plurality of grooves (or "threads") 214 formed thereon. In the depicted embodiment, in which the actuator 100 is a ball screw type linear actuator, a plurality of non-illustrated recirculating balls are disposed within the nut grooves 214, and in selected ones of the screw grooves 132. The balls, in combination with the grooves 132, 214, convert the rotational movement of the screw 104 into the translational movement of the nut 106. It will be appreciated that the direction in which the nut 106 travels will depend on the direction in which the screw 104 rotates.

Returning once again to FIG. 1, it is seen that the nut 106 is coupled, via an extension tube 136, to a rod end 138. In particular, the extension tube 136 has a first end 142 that is coupled to the nut outer surface 208, and a second end 144 that is coupled to the rod end 138. The extension tube 136 and rod end 138 are thus both configured to translate with the nut 106. As shown most clearly in FIG. 3, the rod end 138 has a second dog stop 302 formed thereon, the purpose of which will also be described further below.

The actuator 100 additionally includes a torque bar 146 and a bidirectional stop 148. The torque bar 146 extends through the screw 104, and more particularly through the passageway 128 defined in the screw 104, and has a first end 152 and a second end 153. The torque bar first end 152 is coupled to the screw first end 118. More specifically, at least in the depicted embodiment, the torque bar first end 152 is fixedly pinned to the bull gear 114. It may thus be appreciated that the torque bar 146 rotates with the screw 104.

The bidirectional stop 148 is formed on the second end of the torque bar 146 and is disposed external to the screw 104. In the depicted embodiment, the bidirectional stop 148 is formed integrally with the torque bar 146. It will be appreciated, however, that in other embodiments the bidirectional stop 148 could be formed separately from the torque bar 146 and then coupled thereto. Regardless of whether it is integrally or separately formed, the bidirectional stop 148 has a first side 152 and a second side 154. As shown more clearly in FIGS. 2 and 3, the first side 152 has a third dog stop 156 formed thereon, and the second side 154 has a fourth dog stop 158 formed thereon.

It was noted above that the purposes of the first dog stop 212, which is formed on the nut first end 202, and the second dog stop 302, which is formed on the rod end 138, would be described. That description will now be provided. In particular, and as shown most clearly in FIG. 2, when the nut 106 is moved to the fully extended position, the first dog stop 212 engages the third dog stop 156. As shown most clearly in FIG. 3, when the nut 106 is moved to the fully retracted position, the second dog stop 302 engages the fourth dog stop 158.

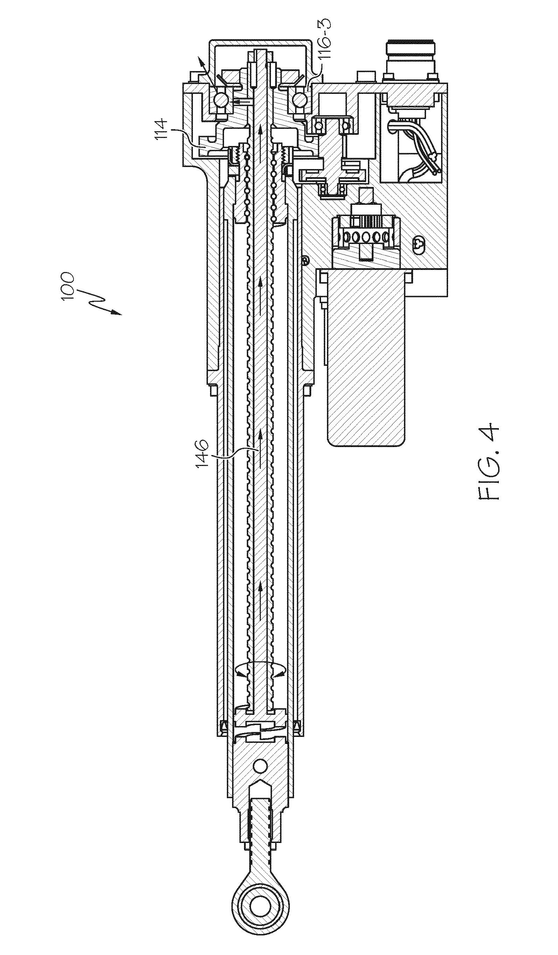

As illustrated using arrows in FIG. 4, when the first and second dog stops 212, 302 engage the third and fourth dog stops 156, 158, respectively, the torque bar 146 twists and any impact torque loads are translated through the torsion bar 146, through the bull gear 114, the bull gear bearing 116-3, and the actuator housing 108, thereby removing these loads from other components within the actuator 100. When the torque bar 146 twists it additionally converts the kinetic energy of the motor 102 into potential energy. Thereafter, when the motor 102 is driven in the opposite direction, the potential energy helps release the stop (non-jamming). This dissipation of impact torque loads allows the system to be sized for normal operating conditions. It will be appreciated that the torque bar sizing, dog stop geometry, and material selection may be determined by the system impact torque loads.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. An actuator, comprising:
an actuator housing;
a screw rotationally mounted within the actuator housing, the screw coupled to receive a drive torque and configured, upon receipt of the drive torque, to rotate;
a nut having an opening through which the screw extends and configured, upon rotation of the screw, to translate between a fully retracted position and a fully extended position, the nut having a first dog stop formed thereon;
a rod end coupled to, and spaced apart from, the nut, the rod end configured to translate with the nut and having a second dog stop formed thereon;
a torque bar extending through the screw and configured to rotate therewith, the torque bar having a first end and a second end; and
a bidirectional stop formed on the first end of the torque bar and disposed external to the screw, the bidirectional stop having a first side and a second side, the first side having a third dog stop formed thereon, the second side having a fourth dog stop formed thereon,
wherein:
the first dog stop engages the third dog stop when the nut is in the fully extended position, and
the second dog stop engages the fourth dog stop when the nut is in the fully retracted position.

2. The actuator of Claim 1, further comprising:
an extension tube coupled between the nut and the rod end and configured to translate therewith.

3. The actuator of claim 1, wherein the torque bar is configured, upon engagement of the first and third dog stops and the second and fourth dog stops, to at least selectively twist.

4. The actuator of claim 1, wherein the torque bar is configured, upon engagement of the first and third dog stops and the second and fourth dog stops, to at least selectively transmit torque loads to the actuator housing.

5. The actuator of claim 1, wherein:
the screw is configured, upon receipt of the drive force, to selectively rotate in a first direction and a second direction; and
the nut is configured, upon rotation of the screw in the first direction and the second direction, to translate in an extend direction and a retract direction, respectively.

6. The actuator of claim 1, wherein the bidirectional stop is formed integrally with the torque bar.

7. The actuator of claim 1, further comprising:
a motor coupled to the screw and configured to selectively supply the drive torque thereto.

8. The actuator of claim 7, further comprising:
a gear set coupled between the motor and the screw.

9. The actuator of claim 1, wherein:
the screw is selected from the group consisting of a ball screw and an acme screw;
and
the nut is selected from the group consisting of a ball nut and an acme nut.
